# EUROPEAN PATENT SPECIFICATION

(11) **EP 1 275 225 B1**
(45) Date of publication and mention of the grant of the patent: **26.12.2007**
(21) Application number: 01920536.8
(22) Date of filing: 19.03.2001
(51) Int. Cl.: H04L 12/56, H04Q 7/38

(54) **METHOD AND APPARATUS FOR EFFICIENT HANDOVER IN PACKET DATA COMMUNICATION SYSTEM**
VERFAHREN UND VORRICHTUNG ZUM EFFIZIENTEN WEITERREICHEN IN DATENPAKETKOMMUNIKATIONSSYSTEMEN
PROCEDE ET APPAREIL POUR UN TRANSFERT EFFICACE DANS DES SYSTEMES DE COMMUNICATION DE PAQUETS DE DONNEES

(30) Priority: 03.04.2000 US 541832
(43) Date of publication of application: 15.01.2003
(73) Proprietor: Ericsson Inc., Plano, TX 75024 (US)
(72) Inventor: LINDSKOG, Jan, S-435 43 Pixbo (SE); LUNDQVIST, Patrik, Encintitas, CA (US); RYDNELL, Gunnar, S-430 65 Ravlanda (SE); LINDHEIMER, Christofer, S-164 42 Kista (SE); MOLNO, Johan, S-128 56 Bromma (SE)
(74) Representative: Kribber, Klaus-Dieter
(86) International application number: PCT/US2001/008804
(87) International publication number: WO 2001/076162

(56) References cited:
- EP-A- 0 332 818
- EP-A- 0 798 943
- WO-A-98/47302
- KANG M S ET AL: "Handover compensation scheme for weighted fair queuing in cellular packet switched networks" 5 June 1997 (1997-06-05) , ELECTRONICS LETTERS, IEE STEVENAGE, GB, VOL. 33, NR. 12, PAGE(S) 1015-1017 XP006007550 ISSN: 0013-5194

## Description

### BACKGROUND OF THE INVENTION

The present invention relates generally to cellular and wireless communication. More specifically, the invention relates to a method for efficient handovers in a packet data communication system.

Recently, there has been a trend in the telecommunication community to focus more and more on wireless packet data communication rather than circuit switched communication. With the tremendous increase of Internet users, and usage of Internet protocols, it is believed that the packet switched communication will soon become larger than the circuit switched communication that today dominates, e.g., cellular voice communication. Cellular communication system manufacturers and operators are therefore looking for solutions to integrate their circuit switched services with wireless packet switched services that can provide reliable and more spectrum efficient connections for packet switched users, e.g., Internet users. This trend has made different types of packet switched communication system evolutions flourish. One of the more well known packet switched cellular systems in the telecommunications community is the extension of the present GSM (Global System for Mobile Communications) cellular communication system, called GPRS (General Packet Radio Service).

GPRS is a packet switched system that uses the same physical carrier structure as the present GSM cellular communication system and is designed to coexist and provide the same coverage as GSM. GPRS radio interface is thus based on a TDMA (Time Division Multiple Access) structured system with 200 kHz carriers divided into eight timeslots with GMSK (Gaussian Minimum Shift Keying) modulation. The multiplexing is such that several users can be allocated on the same timeslot, and use it only when data needs to be transmitted. One user can also be allocated more than one timeslot to increase its throughput of data over the air.

The GPRS specification includes a number of different coding schemes to be used dependent on the quality of the radio carrier. With GPRS, data rates well over 100 kbps will be possible.

There is also ongoing development and standardization of a new air interface mode in GSM, which will affect both packet and circuit switched modes. This new air interface mode is called EDGE (Enhanced Data rates for Global Evolution). EDGE's main features are new modulation and coding schemes for both packet switched and circuit switched data communication. In addition to the Gaussian Minimum Shift Keying (GMSK) modulation, which today is used in both GPRS and GSM circuit switched mode, an 8 symbol Phase Shift Keying (8PSK) modulation is introduced. This modulation can provide users with higher data rates than GMSK in good radio environments.

The packet data mode with EDGE modulation is called EGPRS (Enhanced GPRS) and the circuit switched data mode is called ECSD (Enhanced Circuit Switched Data). With EGPRS, data rates over 384 kbps will be possible with EDGE.

Recent development for another TDMA based cellular system, the cellular communication system compliant to the ANSI/136 standard, referred to as TDMA/136 has been focussed on a packet data system to be integrated with the TDMA/136 circuit switched mode.

This packet data system will also be based on the new EDGE technology as defined for the GPRS extension. It will then allow TDMA/136 operators with a packet data mode to provide data rates up to 384 kbps on 200 kHz carriers with GMSK and 8PSK modulation as defined for EGPRS.

Two modes of EGPRS will be standardized for use together with TDMA/136 systems, one which relies on time synchronization between base stations in the system and one which does not. These two modes are generally referred to as COMPACT and Classic respectively.

While the evolution of cellular packet data communication initially has focussed on developing a system that efficiently utilize resources to transfer delay-insensitive data, the focus is now shifting towards delay sensitive transmissions and higher quality of service requirements.

In order to set up a packet data session a mobile terminal may connect to an Internet server providing packet data service. This connection can use the Transport Control protocol/Internet Protocol (TCP/IP) for end-to-end delivery. The mobile terminal accesses a fixed network via a packet data channel over the air interface. Normally, mobile terminals are connected to the one base station that provides the best communication channel in terms of some quality measure, e. g., Carrier to Interference ratio (C/I). The mobile terminal continuously monitors neighbor base stations such that a re-selection to another cell is prepared when signal quality of the serving base station becomes insufficient. For re-selection of cells when engaged in a packet data connection with low delay and interruption requirements, some interrupt time may be allowed to perform the cell change from a serving base station to a target base station. For connections with higher requirements and with high sensitivity to interruptions, e. g., voice connections, the re-selection needs to be more or less seamless. The seamless or fast re-selection with short interruptions while engaged in a dedicated connection is usually referred to as handover. When a mobile terminal changes its point of attachment from a serving to a target base station the connection is moved over to the target base station by the network and the target base station becomes the "new" serving base station. The network routes subsequent packet data traffic to the mobile terminal via the target base station and the packet data session continues.

Much of the focus in recent development of packet switched radiocommunication is on real-time and multi-media applications. The new services include conversational services, streaming services and best effort services. Conversational services and streaming services are referred to herein as real-time services or applications. The conversational service may be used for voice over IP (VoIP). The streaming service may be used for multi-media applications, such as, for example, sending a video or an audio file to the mobile terminal.

When doing a real-time application, the receiver may buffer received data before actually utilizing it to cope with delay jitter. For a one-way communication, such as video film or audio, it may be acceptable with more delay than for two-way communications, such as VoIP applications. However, there is a real-time aspect to the application even though the delay requirement may vary between applications. For example, with a downlink transaction, depending on the memory available in the mobile terminal and the acceptable delay in the application, the mobile terminal may buffer more or less data. In general, the buffer should be big enough to cope with varying delay between the end systems and the bursty nature of packet data. Varying delay can be due to delays in the network since IP routing can cause the packets to be delivered through different paths in the Internet. Burstiness and varying delay in the networks is also handled by buffering packets in the base station prior to sending the packets on the wireless network to the mobile terminal. Varying radio connections on the wireless path can also contribute to varying delays. When bad wireless conditions are experienced, it may be dealt with by rate adaptation using heavier coding, which can give heavier delays.

When implementing a re-selection in conventional wireless systems, the mobile terminal is out of communication with the network system for some time and is thus not able to send or receive data. The application in the receiving end, either in the mobile terminal or in the fixed node, continues to run by extracting packets from its receive buffer. The sender, for example the base station for a downlink transaction, will not feed the receive buffer in the mobile terminal during re-selection. Thus, the data in the receive buffer is reduced and may run empty during the re-selection. After the re-selection, the receive buffer may be low. If the transmission from the sender to the receiver, for example from the base station to the mobile terminal, starts up and continues at a steady pace after the re-selection, then the buffer will not have an opportunity to build up.

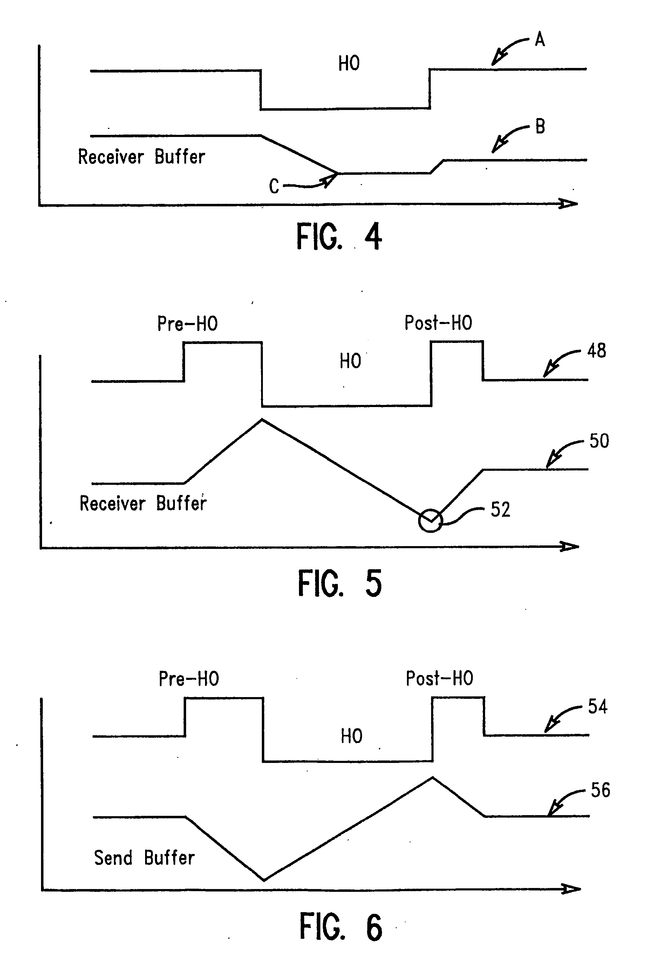

Thus, there is aproblem with the conventional re-selection in that the service may deteriorate because the buffer runs empty. This results in interruption of the application. This is illustrated in Fig. 4 which shows a time line including a curve A illustrating throughput on the wireless network and a second curve B representing amount of data in a receive buffer. As is apparent, the amount of data in the receive buffer is maintained at a generally constant level prior to the re-selection, the re-selection time being represented by "HO". During re-selection the amount of data in the receive buffer gradually decreases until the buffer runs empty at C. Subsequent to the re-selection only a small amount of data is added to the receive buffer so that after the re-selection is done the amount of data in the receive buffer is too small to cope with delay jitter. This can diminish performance.

Similar problems can also occur in the transmit direction during re-selection. There may also be a transmit buffer if the application generates a steady stream of data when engaged in a real-time packet data session. If the transmit buffer is full when a re-selection occurs, this means that already-delayed data will be further delayed. This can cause problems at the receiving end.

Accordingly, there is a need for a method for prioritizing handovers of a mobile terminal.

M. S. Kang et al identify in the article "Handover compensation scheme for weighted fair queuing in cellular packet switched networks", 05.06.1997, Electronics Letters, IEE Stevenage GB, vol. 33, nr. 12, pp. 1015-1017, an unbound fairness phenomenon of weighted fair queuing in cellular packet switched networks and propose a virtual time compensation scheme to maintain bounded fairness.

### SUMMARY OF THE INVENTION

The present invention meets this and other needs by providing a method for prioritizing handovers of a mobile terminal engaged in a packet data session on a cellular packet data traffic channel. In accordance with another aspect of the invention, a method is provided for managing mobile terminal transmit and receive buffers prior to handover from a current base station to another base station for a mobile terminal engaged in a packet data session on a cellular packet data traffic channel. In accordance with still another aspect of the invention, a method is provided for performing a fast re-selection, i. e., handover for packet data systems carrying delay sensitive applications.

Broadly, there is disclosed herein in accordance with the one aspect of the invention, a method for prioritizing handovers from a current base station to another base station of a mobile terminal engaged in a packet data session on a cellular packet data traffic channel. The method comprises determining at the current base station that the mobile terminal is about to perform a handover to another base station, assigning increased communication resources by the current base station to the mobile terminal prior to the handover by the mobile terminal, and increasing throughput on the cellular packet data traffic channel between the current base station and the mobile terminal prior to the handover by the mobile terminal.

Additionally, the method comprises determining at the new base station that the mobile terminal has just performed a handover, assigning increased communication resources by the new base station to the mobile terminal after the handover by the mobile terminal, and increasing throughput on the cellular packet data traffic channel between the new base station and the mobile terminal after the handover by the mobile terminal.

There is disclosed in accordance with the another aspect of the invention, a method for managing mobile terminal transmit and receive buffers prior to handover from a current base station to another base station for a mobile terminal engaged in a packet data session on a cellular packet data traffic channel. The method comprises determining at the mobile terminal that handover from the current base station to another base station should be made, determining at the mobile terminal status of transmit and receive buffers of the mobile terminal, and if the status of the transmit and receive buffers is acceptable, then initiating handover by the mobile terminal, and otherwise the mobile terminal selectively deferring initiating the handover until the transmit and receive buffers have an acceptable status.

Further features and advantages of the invention will be readily apparent from the specification and from the drawing.

### BRIEF DESCRIPTION OF THE DRAWINGS

Fig. 1 illustrates an overview of GPRS nodes present in an exemplary GPRS system;
Fig. 2 is a flow diagram of a handover method as implemented in a network system according to an one aspect of the invention;
Fig. 3 is a flow chart of a handover method as implemented in a mobile terminal according to another aspect of the invention;
Fig. 4 is a timing diagram illustrating amount of receive buffer data with a conventional handover;
Fig. 5 is a timing diagram, similar to Fig. 4, illustrating amount of receive buffer data in a downlink transaction using the method in accordance with the invention;
Fig. 6 is a timing diagram, similar to Fig. 4, illustrating amount of transmit buffer data in an uplink transaction using the method in accordance with the invention; and
Fig. 7 is a block diagram illustrating logical layers implemented in a base station in accordance with the invention.

### DETAILED DESCRIPTION OF THE INVENTION

The present invention is now be described with reference to a GPRS based cellular packet data communication system and extensions thereof, as briefly described in the background. The invention could be used with other systems, such as a TDMA/136 system, also discussed in the background, as will be apparent.

In a GPRS communication system, physical channels on which communication can occur are divided into timeslots on a radio frequency carrier. Each carrier frequency is divided into eight timeslots, or eight physical channels. Eight consecutive timeslots form a GSM frame. The timeslots refer to both up- and downlink timeslots. A TDMA/136 system uses six timeslots.

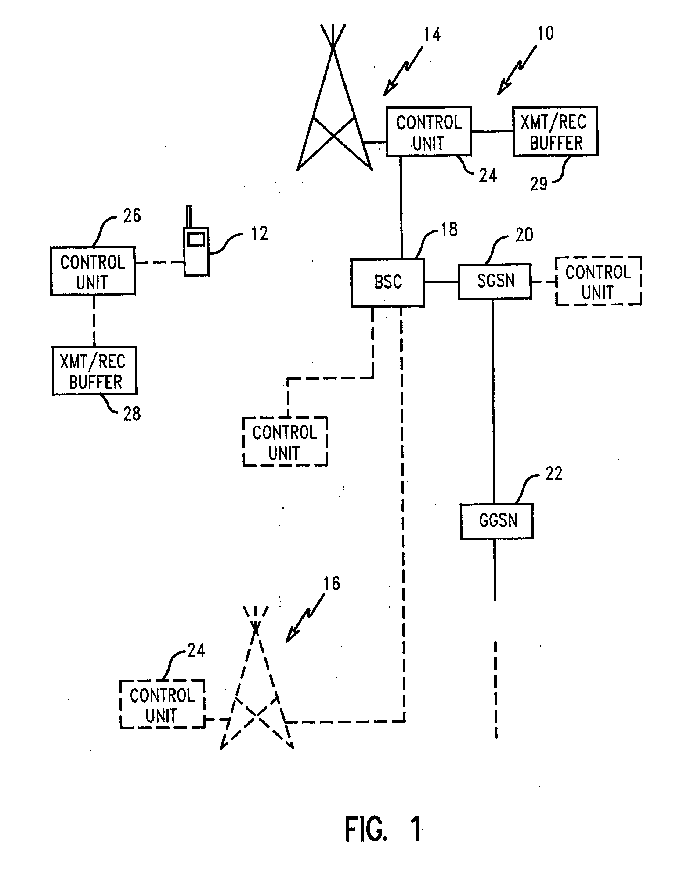

Referring now to Fig. 1, there is illustrated a number of system nodes in an exemplary packet data communication system 10 according to GPRS. Additional nodes may occur in other exemplary systems, or some nodes may be absent. A mobile terminal 12 may communicate with a current or serving base station 14. Of course, more base stations, such as a base station 16, are usually present in packet data systems. The serving base station 14 may be connected to a Base Station Control node (BSC) 18, which in turn is connected to a Serving GPRS Support Node (SGSN) 20, serving one or several BSCs. The SGSN 20 is typically the node controlling the packet flow to and from the different base stations, via the BSCs. Another GPRS support node is a Gateway GPRS Support Node (GGSN) 22 connected to e.g., Internet or other external networks (not illustrated). In Fig. 1, control units 24 are illustrated. They are exemplary located in the base stations 14 and 16, but could alternatively be located in other network nodes as well, e.g., the BSC 18 or the SGSN 20, as shown in phantom. Control functionality may also be split between different nodes. The control units 24 will, in this exemplary system, control allocation in base stations as well as transmission flows and re-selection. Thus, the control unit in a serving base station 14 receives and possibly processes a re-selection request from a mobile station, before forwarding it to a new or target base station, such as the base station 16.

The mobile terminal 12 includes a control unit 26 for controlling its operation. The control unit may take various known forms, such as, for example, a programmed micro controller or processor and memory. The memory stores programs for operating the mobile terminal 12 as well as operating data. The memory includes buffer memory, represented by a block 28, comprising a transmit buffer and/or a receive buffer. The base station control unit 24 includes similar memory 29. The receive buffer is used to buffer data received from the network 10 for downlink or from the mobile terminal 12 for uplink. The transmit buffer is used to buffer data to be transmitted to the network 10 by the mobile terminal 12 or to the mobile terminal 12 by the network 10. The buffer 28 is particularly useful in real-time packet data sessions on a cellular packet data traffic channel, such as real-time streaming and conversational services discussed above.

In accordance with the invention, the network system 10 is adapted to improve buffer management during handover. In the receive direction, the objective is to minimize time the receive buffer is empty. The best case is to avoid the receive buffer ever becoming empty since an empty buffer causes an application to work improperly. In the transmit direction the objective is to minimize the buildup of data in the transmit buffer since this translates to increased delay that may cause an empty receive buffer at the other end. These objectives are achieved using a resource scheduler in the base station control unit 24 or a buffer management system in the mobile terminal control unit 26, as described below.

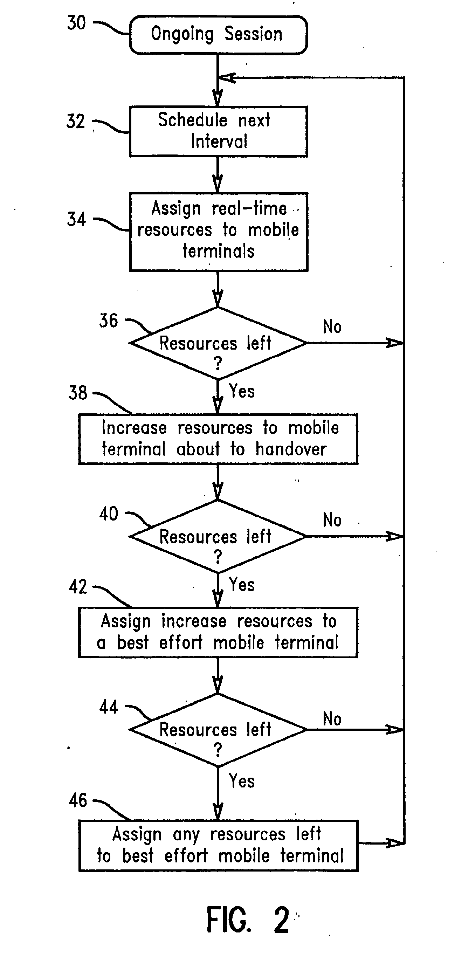

Referring to Fig. 2, a flow diagram illustrates a resource scheduler program implemented in the control unit 24 of Fig. 1 to prioritize handovers from a current base station, such as the base station 14, to a new base station, such as the base station 16, of the mobile terminal 12 while engaged in real-time packet data session on a cellular packet data traffic channel. The flow diagram of Fig. 2 illustrates the network side of the procedure for handovers. While described as implemented in the control unit 24 associated with a base station, the control unit could be associated with another node, as discussed above.

The procedure begins at a block 30 when there is a packet data session ongoing. The SGSN 20 and base station 14 is serving a number of mobile terminals in active mode on a radio packet data channel, i. e:, in READY mode. The mobile terminals have already performed a successful GPRS attach procedure. In order to access the packet switched services, a mobile terminal shall make its presence known to the network by performing a PS attach. At GPRS attach, the SGSN establishes a mobility mangement context containing information pertaining to e. g., mobility and security for the mobile terminal. The scheduler algorithm in the control unit 24 decides which of the actual active mobile terminals shall be granted radio resources on the downlink and uplink during the following scheduling interval. The interval may consist of a number of timeslots, it may be short or long, and is not specifically defined herein.

The procedure then moves to a block 32 which starts scheduling for the next scheduling time interval. This is implemented in an infinite loop. The real-time resources are assigned to mobile terminals at a block 34. This assignment is based on the amount of resources required to provide highest quality of service. A decision block 36 determines if any resources are left during the scheduling interval. If not, then the control loops back to the block 32.

If additional resources are left, as determined at the decision block 36, then the scheduler assigns increased resources at a block 38 to real-time application mobile terminals that are about to handover from a base station or have just done a handover to a base station, and if the particular base station has any data in its transmit buffer. This prioritization can be expanded further to include, for example, prioritizing two-way real-time services over one-way real-time services, etc. From the block 38, a decision block 40 determines if any radio resources remain. If not, then the scheduler loops back to the block 32. If there are resources left, then a block 42 optionally assigns increased resources to a best effort mobile terminal. A best effort mobile terminal is one not implementing a real-time application. A decision block 44 then determines if any resources are left. If not, then the scheduler loops back to the block 32. If so, then the scheduler optionally assigns any resources left to best effort mobile terminals at a block 46. The scheduler then loops back to the block 32 to repeat the process.

As described, the scheduler in the base station control unit 24 prioritizes mobile terminals doing real-time applications, whether it be uplink or downlink, just before a handover or re-selection or just after the handover. The scheduler schedules more traffic for that mobile terminal to build up its receive buffer with excess packet storage or to empty its transmit buffer. The real-time application is prioritized since it can benefit, but the best effort application does not need to buffer. The type of scheduling described results in better service as the receive buffer in the mobile terminal for a downlink transaction or in the fixed node for an uplink transaction is less likely to be low or empty during and after the handover. This is illustrated in Fig. 5 which shows on a time line a first curve 48 representing throughput on the wireless link and a curve 50 representing amount of data stored in a receive buffer. The throughput on the radio link is increased before the handover (pre-HO) and just after the handover (post-HO). The result is that the amount of data in the receive buffer increases pre-HO, gradually decreases during the handover HO, and then increases post-HO to return to a desired buffer amount. However, the receive buffer is never empty, as indicated at 52.

Fig. 6 illustrates similar curves for an uplink transaction. Throughput from the mobile terminal on the radio link is represented by a curve 54. As is apparent, this curve is generally similar to the curve 48 of Fig. 5. A curve 56 illustrates amount of data stored in the transmit buffer in the mobile terminal. As can be seen, the transmit buffer data is decreased pre-HO, gradually increases during the handover HO and is decreased post-HO.

Giving increased radio resources to a real-time mobile terminal may be accomplished in different ways. For example, in a situation where a real-time mobile terminal is allocated a temporary block flow (TBF) it extends over multiple timeslots. The allocated time slots may not be utilized at the same time if a steady rate does not require it. It is therefore possible to send more data temporarily to the mobile terminal by transmitting on all timeslots allocated for a short period of time. Another situation when it is possible to increase allocation is if using half-rate flow. Allocation can be increased to double half-rate, i. e., sending two half-rate blocks during each block period.

The base station control unit 24 must anticipate the mobile terminal 12 is about to do a handover or re-selection in order to adapt the scheduling of packets to or from the mobile terminal 12. In GPRS there is a network-determined handover known as a mobile assisted handover (MAHO) and mobile terminal autonomous re-selection. In the case of the MAHO, it is clearly known in the network that a handover is going to be made since it is done solely at the discretion of the network. Conversely, for the mobile terminal autonomous re-selection, it is not known to the base station in advance at what point the mobile terminal 12 will make a re-selection. Diachina et al., application no. 09/459,675 entitled "Re-Selection For Real-Time Packet Data Networks", the specification of which is hereby incorporated by reference herein, discloses a method where the mobile terminal autonomously determines to re-select and then sends a message to the current base station that it is about to perform a handover to another base station. Thus a method can be used in conjunction with the present invention.

In accordance with another aspect of the invention, buffer management is implemented in the mobile terminal control unit 26 during handover by timing the handover or re-selection decision. In general, a handover or re-selection to a neighbor cell is done when criteria based on radio signal strength and the like are evaluated such that a neighbor cell becomes stronger or more favorable than the current base station. However, there may be a time interval when both the current and the new base station are acceptable to camp on. During this time the handover may be done earlier or later. In accordance with the invention, the handover is done at a time when the buffers are in a favorable or acceptable state, i. e., when the amount of data in the receive buffer is high and when the amount of data in the transmit buffer is low. The mobile terminal 12 requests resources from the network 10 to accomplish this. The handover or re-selection decision algorithm may be designed as a cost function, taking into account the costs of delaying the decision, and getting worse radio conditions, versus the cost of doing a handover with unfavorable buffer status.

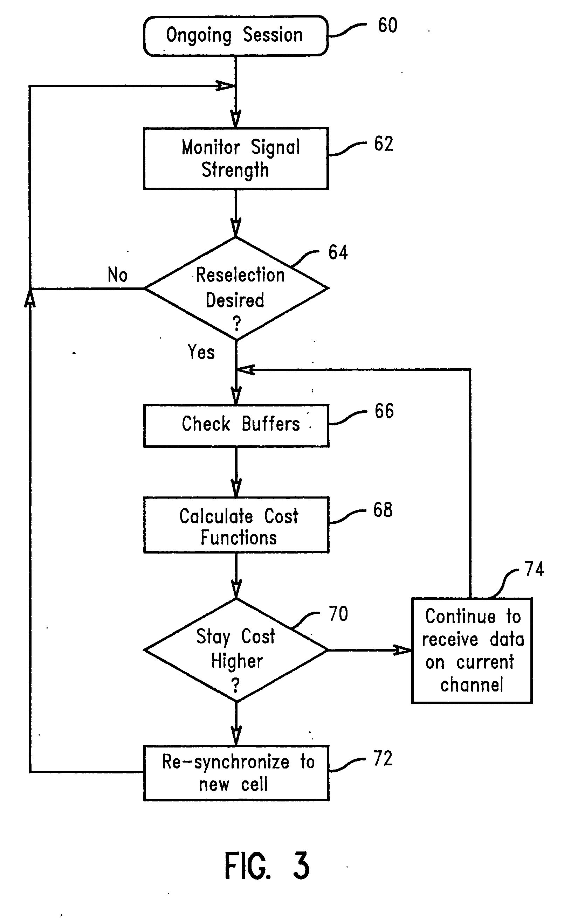

Referring to Fig. 3, a flow diagram illustrates the buffer management routine implemented in the mobile terminal control unit 26 of Fig. 1. This routine begins when the mobile terminal 12 is in ongoing real-time packet data session on a cellular packet data traffic channel at a block 60. The mobile terminal 12 monitors adjacent cells' signal strength at a block 62 to determine when a neighbor base station becomes more desirable than the current base station, or waits for a cell change command from the base station in the case of a MAHO. A decision block 64 determines if re-selection is desired. This is based upon re-selection criteria in the mobile terminal 12 or a command from the current base station 14 indicating that a better neighbor exists and that the mobile terminal should change to camp on the new cell. If not, then the management routine returns to the block 62. If re-selection is desired, then the mobile terminal checks the state of the transmit and receive buffers 28 at a block 66. A cost function is calculated at a block 68. The cost function takes into account the radio channel condition, the costs of, for example, delaying the cell change's decision, and getting worse conditions, versus the cost of doing a handover with unfavorable buffers. A decision block 70 determines if the cost of staying in the current cell is higher than the cost of changing to the new cell. If so, then the mobile terminal re-synchronizes to the new cell at a block 72 and returns to the block 62. If the cost is not higher, then the mobile terminal continues to try to send and receive data for a predetermined time interval on the current channel at a block 74. The mobile terminal 12 continues to monitor the radio channel conditions. The buffer management routine then loops back to the block 66.

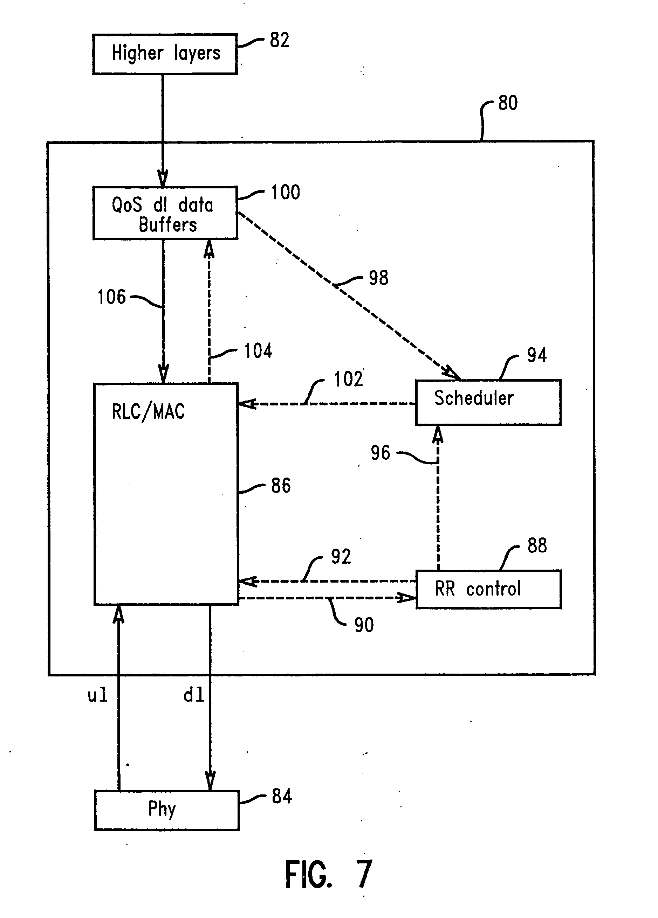

Referring to Fig. 7, a block diagram illustrates functional layers for the base station scheduler described above in the flow diagram of Fig. 2. A large block 80 represents the functional layers related to the scheduling function which communicate with higher layers represented by a block 82 and physical layers represented by a block 84. The physical layer 84 represents how bits are modulated to and from the wireless network and include an uplink interface "ul" and a downlink interface "dl". The physical layer 84 communicates with a radio link control/medium access control block (RLC/MAC) 86. A radio resource control function 88 receives requests for reselection or MAHO measurements from mobile terminals via an interface 90 from the RLC/MAC 86. The radio resource control function 88 indicates back to the mobile terminal via the RLC/MAC 86 a re-selection accept or in the case of MAHO the handover command over an interface 92. The radio resource control function 88 also indicates to a scheduler function 94 over an interface 96 that the mobile terminal will change base stations. The scheduler function 94 receives information on an interface 98 on the status of the quality of service buffers for each mobile terminal represented by a function 100. The scheduler function 94 assigns the radio resources during the next scheduling interval and signals to the RLC/MAC 86 on an interface 102. The RLC/MAC requests data accordingly from the QoS data buffers 100 over an interface 104. The data is received over an interface 106 to be transmitted to the mobile terminal on the downlink dl.

Thus, in accordance with the invention, mobile terminals are enabled to more efficiently make a handover or re-selection to a neighbor cell while engaged in packet data transfer and, in particular, to do so when engaged in a real-time packet data application.

## Claims

1. A method of prioritizing a handover from current base station (14) to another base stations (16) of a mobile terminal (12) engaged in a packet data session on a cellular packet data traffic channel, **characterized by** the steps of :
determining at the current base station (14) that the mobile terminal (12) is about to perform the handover;
assigning increased communication resources by the current base station (14) to the mobile terminal (12) prior to the handover by the mobile terminal (12), and
increasing throughput on the cellular packet data traffic channel between the current base station (14) and the mobile terminal (12) prior to the handover by the mobile terminal (12).

2. The method of claim 1 wherein increasing throughput on the cellular packet data traffic channel between the current base station (14) and the mobile terminal (12) prior to the handover by the mobile terminal (12) comprises increasing received data stored in a receive buffer of the mobile terminal (12).

3. The method of claim 1 wherein increasing throughput on the cellular packet data traffic channel between the current base station (14) and the mobile terminal (12) prior to the handover by the mobile terminal (12) comprises decreasing transmit data stored in a transmit buffer of the mobile terminal 12.

4. The method of claim further comprising assigning additional increased communication resources by the current base station (14) to a best effort mobile terminal (12).

5. A method of prioritizing a handover to a new base station (16) of a mobile terminal (12) engaged in a packet data session on a cellular packet data traffic channel, **characterized by** the steps of :
determining at the new base station (16) at the mobile terminal (12) has just performed the handover to the new base station (16),
assigning increased communication resources by the new base station (16) to the mobile terminal (12) after the handover by the mobile terminal (12), and
increasing throughput on the cellular packet data traffic channel between the new base station (16) and the mobile terminal (12) after the handover by the mobile terminal (12).

6. The method of claim 5 wherein increasing throughput on the cellular packet data traffic channel between the new base station (16) and the mobile terminal (12) after the handover by the mobile terminal (12) comprises increasing received data stored in a receive buffer of the mobile terminal (12).

7. The method of claim 5 wherein increasing throughput on the cellular packet data traffic channel between the new base station (16) and the mobile terminal (12) after the handover by the mobile terminal (12) comprises decreasing transmit data stored in a transmit buffer of the mobile terminal (12).

8. The method of claim 5 further comprising assigning additional increased communication resources by the new base station (16) to a best effort mobile terminal (12).

9. A method of prioritizing a handover from a current base station (14) to a new base station (16) of a mobile terminal (12) engaged in a packet data session on a cellular packet data traffic channel, comprising:
determining at the current base (14) station that the mobile terminal (12) is about to perform the handover to the new base station (16),
assigning increased communication resources by the current base station (14) to the mobile terminal (12) prior to the handover by the mobile terminal (12),
increasing throughput on the cellular packet data traffic channel between the current base station (14) and the mobile terminal (12) prior to the handover by the mobile terminal (12),
assigning increased communication resources by the new base station (16) to the mobile terminal (12) after the handover by the mobile terminal (12), and
increasing throughput on the cellular packet data traffic channel between the new base station (16) and the mobile terminal (12) after the handover by the mobile terminal (12).

10. The method of claim 9 wherein increasing throughput on the cellular packet data traffic channel between the current base station (14) or the new base station (16) and the mobile terminal comprises increasing received data stored in a receive buffer of the mobile terminal (12).

11. The method of claim 9 wherein increasing throughput on the cellular packet data traffic channel between the current base station (14) or the new base station (16) and the mobile terminal (12) comprises decreasing transmit data stored in a transmit buffer of the mobile terminal (12).

12. A control apparatus for use in a cellular packet data network system for prioritizing a handover from or to a base station (14, 16) engaged in a packet data session, **characterized in that** it comprises
a network control unit (24) adapted to determine that the handover is about to be performed or has just been performed for the packet data session on the cellular packet data traffic channel, and to assign increased communication resources by the base station (14, 16) prior to the handover or after the handover, thereby increasing throughput on the cellular packet data traffic channel prior to the handover or after the handover.

13. The control apparatus of claim 12 further comprising a receive buffer (29) operatively associated with the network control unit for storing received data and wherein increasing throughput on the cellular packet data traffic channel comprises increasing received data stored in the receive buffer (29).

## Patentansprüche

1. Verfahren zum Priorisieren eines Handovers von einer derzeitigen Basisstation (14) zu einer anderen Basisstation (16) eines mobilen Endgeräts (12), das in einer Paketdatensitzung auf einem zellularen Paketdaten-Verkehrskanal ist, **gekennzeichnet durch** die Schritte von:
Bestimmen an der derzeitigen Basisstation (14), dass das mobile Endgerät (12) davor steht, das Handover durchzuführen;
Zuweisen von erhöhten Datenübertragungsressourcen durch die derzeitige Basisstation (14) zu dem mobilen Endgerät (12) vor dem Handover **durch** das mobile Endgerät (12); und
Erhöhen des Durchsatzes auf dem zellularen Paketdaten-Verkehrskanal zwischen der derzeitigen Basisstation (14) und dem mobilen Endgerät (12) vor dem Handover durch das mobile Endgerät (12).

2. Verfahren nach Anspruch 1, wobei Erhöhen des Durchsatzes auf dem zellularen Paketdaten-Verkehrskanal zwischen der derzeitigen Basisstation (14) und dem mobilen Endgerät (12) vor dem Handover durch das mobile Endgerät (12) ein Erhöhen der empfangenen Daten, die in einem Empfangspuffer des mobilen Endgeräts (12) gespeichert sind, umfasst.

3. Verfahren nach Anspruch 1, wobei das Erhöhen des Durchsatzes auf dem zellularen Paketdaten-Verkehrskanal zwischen der derzeitigen Basisstation (14) und dem mobilen Endgerät (12) vor dem Handover durch das mobile Endgerät (12) ein Verringern der Sendedaten umfasst, die in einem Sendepuffer des mobilen Endgeräts (12) gespeichert sind.

4. Verfahren nach Anspruch 1, des Weiteren umfassend Zuweisen von zusätzlichen erhöhten Datenübertragungsressourcen durch die derzeitige Basisstation (14) zu einem mobilen Best Effort-Endgerät (12).

5. Verfahren zum Priorisieren eines Handovers zu einer neuen Basisstation (16) eines mobilen Endgeräts (12), das in einer Paketdatensitzung auf einem zellularen Paketdaten-Verkehrskanal ist, **gekennzeichnet durch** die Schritte:
Bestimmen an der neuen Basisstation (16), dass das mobile Endgerät (12) gerade das Handover zu der neuen Basisstation (16) durchgeführt hat;
Zuweisen von erhöhten Datenübertragungsressourcen durch die neue Basisstation (16) zu dem mobilen Endgerät (12) nach dem Handover **durch** das mobile Endgerät (12) ; und
Erhöhen des Durchsatzes auf dem zellularen Paketdaten-Verkehrskanal zwischen der neuen Basisstation (16) und dem mobilen Endgerät (12) nach dem Handover **durch** das mobile Endgerät (12).

6. Verfahren nach Anspruch 5, wobei Erhöhen des Durchsatzes auf dem zellularen Paketdaten-Verkehrskanal zwischen der neuen Basisstation (16) und dem mobilen Endgerät (12) nach dem Handover durch das mobile Endgerät (12) ein Erhöhen der empfangenen Daten, die in einem Empfangspuffer des mobilen Endgeräts (12) gespeichert sind, umfasst.

7. Verfahren nach Anspruch 5, wobei das Erhöhen des Durchsatzes auf dem zellularen Paketdaten-Verkehrskanal zwischen der neuen Basisstation (16) und dem mobilen Endgerät (12) nach dem Handover durch das mobile Endgerät (12) ein Verringern der Sendedaten umfasst, die in einem Sendepuffer des mobilen Endgeräts (12) gespeichert sind.

8. Verfahren nach Anspruch 5, des Weiteren umfassend Zuweisen von zusätzlichen erhöhten Datenübertragungsressourcen durch die neue Basisstation (16) zu einem mobilen Best Effort-Endgerät (12).

9. Verfahren zum Priorisieren eines Handovers von einer derzeitigen Basisstation (14) zu einer neuen Basisstation (16) eines mobilen Endgeräts (12), das in einer Paketdatensitzung auf einem zellularen Paketdaten-Verkehrskanal ist, umfassend:
Bestimmen an der derzeitigen Basisstation (14), dass das mobile Endgerät (12) davor steht, das Handover zu der neuen Basisstation (16) durchzuführen;
Zuweisen von erhöhten Datenübertragungsressourcen durch die derzeitige Basisstation (14) zu dem mobilen Endgerät (12) vor dem Handover durch das mobile Endgerät (12);
Erhöhen des Durchsatzes auf dem zellularen Paketdaten-Verkehrskanal zwischen der derzeitigen Basisstation (14) und dem mobilen Endgerät (12) vor dem Handover durch das mobile Endgerät (12);
Zuweisen von erhöhten Datenübertragungsressourcen durch die neue Basisstation (16) zu dem mobilen Endgerät (12) nach dem Handover durch das mobile Endgerät (12);
Erhöhen des Durchsatzes auf dem zellularen Paketdaten-Verkehrskanal zwischen der neuen Basisstation (16) und dem mobilen Endgerät (12) nach dem Handover durch das mobile Endgerät (12).

10. Verfahren nach Anspruch 9, wobei Erhöhen des Durchsatzes auf dem zellularen Paketdaten-Verkehrskanal zwischen der derzeitigen Basisstation (14) oder der neuen Basisstation (16) und dem mobilen Endgerät ein Erhöhen der empfangenen Daten, die in einem Empfangspuffer des mobilen Endgeräts (12) gespeichert sind, umfasst.

11. Verfahren nach Anspruch 9, wobei das Erhöhen des Durchsatzes auf dem zellularen Paketdaten-Verkehrskanal zwischen der derzeitigen Basisstation (14) oder der neuen Basisstation (16) und dem mobilen Endgerät (12) ein Verringern der Sendedaten umfasst, die in einem Sendepuffer des mobilen Endgeräts (12) gespeichert sind.

12. Steuervorrichtung zur Verwendung in einem zellularen Paketdatennetzsystem zum Priorisieren eines Handovers von oder zu einer Basisstation (14, 16), die in einer Paketdatensitzung ist, **dadurch gekennzeichnet, dass** sie umfasst:
eine Netzwerk-Steuereinheit (24), die ausgelegt ist zum Bestimmen, dass das Handover für die Paketdatensitzung auf dem zellularen Paketdaten-Verkehrskanal davor steht durchgeführt zu werden oder gerade durchgeführt worden ist, und zum Zuweisen von erhöhten Datenübertragungsressourcen durch die Basisstation (14, 16) vor dem Handover oder nach dem Handover, wodurch der Durchsatz auf dem zellularen Paketdaten-Verkehrskanal vor dem Handover oder nach dem Handover erhöht wird.

13. Steuervorrichtung nach Anspruch 12, des Weiteren umfassend einen Empfangspuffer (29), der im Betrieb mit der Netzwerk-Steuereinheit verbunden ist zum Speichern von empfangenen Daten, und wobei ein Erhöhen des Durchsatzes auf dem zellularen Paketdaten-Verkehrskanal ein Erhöhen der empfangenen Daten umfasst, die in dem Empfangspuffer (29) gespeichert sind.

## Revendications

1. Procédé pour hiérarchiser selon des priorités un transfert intercellulaire d'une station de base actuelle (14) vers une autre station de base (16) d'un terminal mobile (12) engagé dans une session de paquets de données sur un canal de trafic de paquets de données cellulaire, **caractérisé par** les étapes consistant à :
déterminer au niveau de la station de base actuelle (14) que le terminal mobile (12) est sur le point d'effectuer le transfert intercellulaire ;
assigner des ressources de communication accrues par la station de base actuelle (14) au terminal mobile (12) avant le transfert intercellulaire par le terminal mobile (12), et
augmenter le débit sur le canal de trafic de données en paquets cellulaire entre la station de base actuelle (14) et le terminal mobile (12) avant le transfert intercellulaire par le terminal mobile (12).

2. Procédé selon la revendication 1, dans lequel l'augmentation du débit sur le canal de trafic de paquets de données cellulaire entre la station de base actuelle (14) et le terminal mobile (12) avant le transfert intercellulaire par le terminal mobile (12) consiste à augmenter les données reçues mémorisés dans une mémoire tampon de réception du terminal mobile (12).

3. Procédé selon la revendication 1, dans lequel l'augmentation du débit sur le canal de trafic de paquets de données cellulaire entre la station de base actuelle (14) et le terminal mobile (12) avant le transfert intercellulaire par le terminal mobile (12) consiste à diminuer les données transmises mémorisées dans une mémoire tampon de transmission du terminal mobile (12).

4. Procédé selon la revendication 1, consistant en outre à assigner des ressources de communication accrues additionnelles par la station de base actuelle (14) à un terminal mobile de meilleur effort (12).

5. Procédé pour hiérarchiser selon des priorités un transfert intercellulaire vers une nouvelle station de base (16) d'un terminal mobile (12) engagé dans une session de paquets de données sur un canal de trafic de paquets de données cellulaire, **caractérisé par** les étapes consistant à :
déterminer au niveau de la nouvelle station de base (16) que le terminal mobile (12) vient juste d'effectuer le transfert intercellulaire vers la nouvelle station de base (16) ;
assigner des ressources de communication accrues par la nouvelle station de base (16) au terminal mobile (12) après le transfert intercellulaire par le terminal mobile (12) ; et
augmenter le débit sur le canal de trafic de paquets de données cellulaire entre la nouvelle station de base (16) et le terminal mobile (12) après le transfert intercellulaire par le terminal mobile (12).

6. Procédé selon la revendication 5, dans lequel l'augmentation du débit sur le canal de trafic de paquets de données cellulaire entre la nouvelle station de base (16) et le terminal mobile (12) après le transfert intercellulaire par le terminal mobile (12) consiste à augmenter les données reçues mémorisés dans une mémoire tampon de réception du terminal mobile (12).

7. Procédé selon la revendication 5, dans lequel l'augmentation du débit sur le canal de trafic de paquets de données cellulaire entre la nouvelle station de base (16) et le terminal mobile (12) après le transfert intercellulaire par le terminal mobile (12) consiste à diminuer les données transmises mémorisées dans une mémoire tampon de transmission du terminal mobile (12).

8. Procédé selon la revendication 5, consistant en outre à assigner des ressources de communication accrues additionnelles par la nouvelle station de base (16) à un terminal mobile de meilleur effort (12).

9. Procédé pour hiérarchiser selon des priorités un transfert d'une station de base actuelle (14) vers une nouvelle station de base (16) d'un terminal mobile (12) engagé dans une session de paquets de données sur un canal de trafic de paquets de données cellulaire, consistant à :
déterminer au niveau de la station de base actuelle (14) que le terminal mobile (12) st sur le point d'effectuer le transfert intercellulaire vers la nouvelle station de base (16) ;
assigner des ressources de communication accrues par la station de base actuelle (14) au terminal mobile (12) avant le transfert intercellulaire par le terminal mobile (12) ;
augmenter le débit sur le canal de trafic de paquets de données cellulaire entre la station de base actuelle (14) et le terminal mobile (12) avant le transfert intercellulaire par le terminal mobile (12) ;
assigner des ressources de communication accrues par la nouvelle station de base (16) au terminal mobile (12) après le transfert intercellulaire par le terminal mobile (12), et
augmenter le débit sur le canal de trafic de paquets de données cellulaire entre la nouvelle station de base (16) et le terminal mobile (12) après le transfert intercellulaire par le terminal mobile (12).

10. Procédé selon la revendication 9, dans lequel l'augmentation du débit sur le canal de trafic de paquets de données cellulaire entre la station de base actuelle (14) ou la nouvelle station de base (16) et le terminal mobile consiste à augmenter les données reçues mémorisées dans une mémoire tampon de réception du terminal mobile (12).

11. Procédé selon la revendication 9, dans lequel l'augmentation du débit sur le canal de trafic de paquets de données cellulaire entre la station de base actuelle (14) ou la nouvelle station de base (16) et le terminal mobile (12) consiste à diminuer les données transmises mémorisées dans une mémoire tampon de transmission du terminal mobile (12).

12. Appareil de commande prévu pour une utilisation aérienne 16 dans un système de réseau de paquets de données cellulaire, pour hiérarchiser selon des priorités un transfert de ou vers une station de base (14,16) engagée dans une session de paquets de données, **caractérisé en ce que** il comprend :
une unité de commande de réseau (24) adaptée afin de déterminer que le transfert intercellulaire est sur le point d'être effectué ou vient juste d'être effectué pour la session de paquets de données sur le canal de trafic de paquets de données cellulaire, et d'assigner des ressources de communication accrues par la station de base (14,16) avant ou après le transfert intercellulaire, en augmentant ainsi le débit sur le canal de trafic de paquets de données cellulaire avant ou après le trafic intercellulaire.

13. Appareil de commande selon la revendication 12, comprenant en outre une mémoire tampon de réception (29) associée opérationnellement à l'unité de commande de réseau pour mémoriser des données reçues et dans lequel l'augmentation du débit sur le canal de trafic de paquets de données cellulaire consiste à augmenter les données reçues mémorisées dans la mémoire tampon de réception (19).
